(19) **Europäisches Patentamt / European Patent Office / Office européen des brevets**

(11) **EP 3 605 329 B1**

(12) **EUROPEAN PATENT SPECIFICATION**

(45) Date of publication and mention
of the grant of the patent:
**04.01.2023 Bulletin 2023/01**

(21) Application number: **18306036.7**

(22) Date of filing: **31.07.2018**

(51) International Patent Classification (IPC):
***G06F 9/50*** *(2006.01)*

(52) Cooperative Patent Classification (CPC):
**G06F 9/5083;** G06F 2209/509

(54) **CONNECTED CACHE EMPOWERED EDGE CLOUD COMPUTING OFFLOADING**

DURCH VERBUNDENE CACHES BEFÄHIGTES EDGE-CLOUD-COMPUTING-OFFLOADING

DÉCHARGEMENT INFORMATIQUE CLOUD À LIMITE HABILITÉE PAR MÉMOIRE CACHE
CONNECTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.02.2020 Bulletin 2020/06**

(73) Proprietor: **Commissariat à l'énergie atomique
et aux énergies alternatives
75015 Paris (FR)**

(72) Inventors:
• **CALVANESE STRINATI, Emilio
38054 Grenoble Cedex 09 (FR)**
• **DI PIETRO, Nicola
38054 Grenoble Cedex 09 (FR)**

(74) Representative: **Brevalex
56, Boulevard de l'Embouchure
B.P. 27519
31075 Toulouse Cedex 2 (FR)**

(56) References cited:
**FR-A1- 3 045 859**

• **LIXING CHEN ET AL: "Collaborative Service
Caching for Edge Computing in Dense Small Cell
Networks", ARXIV.ORG, CORNELL UNIVERSITY
LIBRARY, 201 OLIN LIBRARY CORNELL
UNIVERSITY ITHACA, NY 14853, 25 September
2017 (2017-09-25), XP080823403,**
• **WANG SHUO ET AL: "A Survey on Mobile Edge
Networks: Convergence of Computing, Caching
and Communications", IEEE ACCESS, vol. 5, 21
March 2017 (2017-03-21), pages 6757-6779,
XP011651386, DOI:
10.1109/ACCESS.2017.2685434 [retrieved on
2017-06-02]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The present invention relates to the field of Mobile Edge Computing (MEC), also known as Multi-access Edge Computing, in particular in small-cell networks or SSCs (*Serving Small Cells).*

**BACKGROUND OF THE INVENTION**

With the rapid progress of wireless technology and the upcoming 5G revolution, mobile devices will require extensive computing resources, ubiquitous connection availability, ultra-low latency and low power consumption. However, the development of new applications and services is limited by the finite computing power and battery life of these devices. In order to cope with these limits, data-hungry and computing-intensive tasks can be offloaded to the cloud, at the expense of latency due to the difficulty of controlling end-to-end delays in such instance. To reduce end-to-end delay and the need for extensive user-cloud communication, it has been proposed to bring cloud support the closest possible to users. This solution known as Mobile Edge Cloud (MEC) extends cloud capabilities at the network edge by providing communication, computing, and caching resources there. In practice, data will be offloaded, processed, and cached at MEC servers deployed at the base stations of the wireless network.

This trend in computational resource management is in fact similar to the one already witnessed in radio resource management, namely to provide more resources closer to the user. For example, in heterogeneous networks, the coexistence of small cells with macro-cells in a same geographical area leads to a two-tier structure that enables a more efficient usage of radio resources. It has been proposed to merge these two trends in a single framework referred to as femto-cloud, where the base stations or HceNBs (Home cloud enhanced Node B) not only provide short range wireless access (as HeNB in a femto-cell) but also proximity storage and computational resources.

In the following, we will more generally consider MEC networks where MEC stands for Mobile Edge Cloud or Mobile Edge Computing or Multi-access Edge Computing. Mobile Edge Computing is the process according to which User Equipments (UEs) may offload their computational tasks to other network nodes equipped with computational capacity. More specifically, serving small cells of the MEC network (that could be embodied as femto-cells, pico-cells, relays, etc.), also called SSCs, are endowed with radio access technology, computing units and cache memories to serve requests of UEs and run computing tasks on their behalf. Umbrella macro-cells may coexist with SSCs in the network to provide long-range coverage.

As UEs may repetitively offload tasks to a SSC, it has been disclosed, for example in patent application FR-A-3045859, to cache computation results in order to avoid computing again and again frequently requested tasks. Where a computation is cached, the results thereof are simply retrieved from the cache memory and not re-computed. The advantages of computation caching at the edge of the network are manifold: it allows for a drastic reduction of computation time and energy consumption both at the UE and the SSC side, it alleviates uplink traffic, frees network resources for other purposes, and substantially decreases the SSC workload.

The document "Collaborative Service Caching for Edge Computing in Dense Small Cell Networks", Lixing Chen et al, Cornell University Library, 25 September 2017, discloses a method for managing caches in a MEC (Mobile Edge Computing) network. It proposes either an individual management of the caches by the different small cells or a collaborative management at the level of the whole network. The decision of caching or not the result of a task depends only on the prediction of the requests of the users.

Computation caching differs from conventional content caching in that the cached files are results of previous tasks or computation of instructions executed by the SSC, rather than packets of data simply transiting through the SSC. Furthermore, in content caching the amount of data sent through the network and then delivered to the end user has the same order of magnitude as the amount of data actually stored in the cache (*i.e.* the size of the file). Similarly, in computation caching, the amount of data stored in the cache has the same order of magnitude as the size of the computation result. However, the size of the input information required to perform that computation can be much bigger than the size of the computation result. The input information travels over the uplink from the UE to the SSC whereas the computation result travels over the downlink from the SSC to the UE. The cost of sending the input information to the SSC can be spared when a computation result is already available in the cache and does not need to be computed.

Although content caching policies have largely been investigated in the prior art, see for example the article authored by S. Wang et al. entitled "A survey of mobile edge networks: convergence of computing, caching and communications" published in IEEE Access, vol. 5, pp. 6757-6779, 2017, no specific computation caching policy has been developed so far.

The object of the present invention is therefore to propose a computation caching policy for a serving cell such as an SSC cell in a MEC network, which can take into account and benefit from the particular features of off-loadable computational tasks. More specifically, the present invention aims at caching tasks in an SSC, *i.e.* selecting the results of tasks to be stored in a cache of finite size, given the requests for computation offloading of these tasks by the UEs.

**BRIEF DESCRIPTION OF THE INVENTION**

The present invention is defined in the appended independent claims. Various preferred embodiments are defined in the dependent claims.

**BRIEF DESCRIPTION OF THE DRAWINGS**

The present invention will be better understood from the description of the following embodiments, by way of illustration and in no way limitative thereto:

> Fig. 1 schematically illustrates a method of caching results of tasks requested by UEs in a SSC, according to a first embodiment the invention;
> Fig. 2 schematically illustrates a method of caching results of tasks requested by UEs in a SSC, according to a second embodiment of the invention;
> Fig. 3 schematically illustrates a method of caching results of tasks requested by UEs in a SSC, according to a third embodiment of the invention;
> Fig. 4 schematically illustrates a method of caching results of tasks requested by UEs in a SSC, according to a fourth embodiment of the invention.

**DETAILED DISCLOSURE OF PARTICULAR EMBODIMENTS.**

We will consider in the following a cell belonging to a MEC network, that is a cell provided with local computing and caching resources, typically a SSC. The computing resources can be embodied by one or more computers located in the base station serving the cell or by virtual machines (VMs) emulated on a local server. The caching resources are typically embodied by a cache memory hosted in the base station or a local server. In some instances, the computing and/or caching resources may be pooled among a cluster of neighboring cells.

The user equipments (UEs) may offload computational tasks to the MEC via the SSC. We will assume that the computational capacity of the SSC is expressed in terms of number ( $f$ ) of CPU cycles per second and that the cache memory has a size of $m$ bits. The tasks the UEs may offload to the MEC belong to a finite set of tasks, hereinafter referred to as the computation catalogue $C=\{c_1,...,c_K\}$. This computation catalogue is predetermined and can be updated in operation if necessary. A task $c_k$ is defined by a triplet $c_k = \left\{ W_k^{in}, e_k, W_k^{out} \right\}$ where $k$ is the label of the task, $W_k^{in}$ is the sequence of input bits, $e_k$ is the number of CPU cycles per bit needed to perform the task, and $W_k^{out}$ is the sequence of bits representing the computation result. We denote $\left| W_k^{in} \right|$ and $\left| W_k^{out} \right|$ the size in bits of $W_k^{in}$ and $W_k^{out}$, respectively.

A request from a user equipment to offload a task $c_k$ is denoted $r=(k,t)$, where $k$ is the label of the requested task and $t$ indicates the maximum latency, i.e. the maximum delay for getting the computation result $W_k^{out}$.

If the result $W_k^{out}$ the task in not already available in the cache memory, the SSC checks whether it can perform the requested task within the time $t$. If it is not the case, the request is denied. Otherwise, the task is accepted.

The goal of the present invention is *inter alia* to define a caching policy of the results of the tasks of the computation catalogue, in other words to select the tasks for which the results are stored in the cache memory.

We define an application $\sigma: C \rightarrow \{0,1\}$ which associates each task $c_k$ of the computation catalogue with an indicator $\sigma_k \in \{0,1\}$, $\sigma_k=0$ ($\sigma_k=1$) meaning that the computation results of task $c_k$ is not stored (is stored) in the cache memory. Due to the finite size of the cache, only the $K$-uplets of indicators meeting the constraint:

$$\sum_{k=1}^{K} \sigma_k \left| W_k^{out} \right| \leq m \qquad (1)$$

will correspond to an acceptable caching policy $\omega$. A caching policy $\omega=(\sigma_1,...,\sigma_K)$ is represented by an element of $\{0,1\}^K$, indicating for each task $c_k$ whether the computation results are stored. The subset of $\{0,1\}^K$ comprised of the acceptable caching policies is denoted $\Omega$.

The cost of offloading a task $c_k$ can be regarded as a sum of cost components:

- the cost of sending the offload request $r=(k,t)$ from the UE to SSC, denoted $\Gamma_{req}(c_k)$;

- the cost of uploading the computation input data $W_k^{in}$ from the UE to the SSC, denoted $\Gamma_{UL}(c_k)$, and of running the computational task $c_k$ at the SSC, denoted $\Gamma_{comp}(c_k)$, these costs being only incurred if the computation results are not already stored in the cache, i.e. if $\sigma_k = 0$;

- the cost of downloading the computation results, $W_k^{out}$, from the SSC to the UE, denoted $\Gamma_{DL}(c_k)$;

- a fixed processing cost at the SSC level, denoted $\gamma$, independent of the task to be carried out. This fixed processing cost may encompass for example the cost of maintaining the computing and caching resources active.

The total cost of offloading a task $c_k$ can therefore be expressed as follows:

$$\Gamma(c_k) = \Gamma_{req}(c_k) + (1-\sigma_k)\big(\Gamma_{UL}(c_k) + \Gamma_{comp}(c_k)\big) + \Gamma_{DL}(c_k) + \gamma \qquad (2)$$

This total cost is therefore equal to $\Gamma_1(c_k)=\Gamma_{req}(c_k)+\Gamma_{DL}(c_k)+\gamma$ if the computation result of the task is cached and to $\Gamma_0(c_k)=\Gamma_1(c_k)+(\Gamma_{UL}(c_k)+\Gamma_{comp}(c_k))$ if the SSC has to perform the computation. Indeed, where the computation result of the task $c_k$ is cached, there is no need to upload the input data and to perform the task computation. The output result is simply retrieved from the cache and downloaded directly to the UE which requested it.

Given now a sequence of offloading requests sent by UEs to the SSC, $R=r_1,r_2,...,r_N$, over a given period, where $r_n=(k_n,t_n)$ for some $k_n\in\{1,...,K\}$, and denoting $\Gamma(r_n)=\Gamma(c_{k_n})$, the search for the optimal caching policy $\omega^{opt}$ during this period boils down to minimizing the total cost:

$$\Gamma_{tot}(\omega) = \sum_{n=1}^{N}\Gamma(r_n) \qquad (3)$$

while meeting the constraint (1), that is:

$$\omega^{opt} = \arg\min_{\omega\in\Omega}\left(\sum_{n=1}^{N}\Gamma(r_n)\right) \qquad (4)$$

If $\omega^{opt} = \left(\sigma_1^{opt},...,\sigma_K^{opt}\right)$ is known, then the cache contains the computation results $\left\{W_k^{out}\,\big|\,\sigma_k^{opt}=1\right\}$.

As *Card* $(\Omega)$ grows exponentially with $K$, an exhaustive search within $\Omega$ can be extremely time consuming. According to the present invention, it is advantageously proposed to assign to each task $c_k$ a "cacheability" value according to a caching metric $\lambda$, where $\lambda$ is an application $\lambda : C \to \mathbb{R}^+$.

The caching policy based on caching metric $\lambda$ fills the cache by prioritizing the tasks having the highest cacheability values.

More specifically, the cacheability values (or caching metric values) $\lambda(c_k)$ are sorted, thereby defining a permutation $\pi:\{1,...,K\} \to\{1,...,K\}$ such that $\lambda(c_{\pi(1)})\geq\lambda(c_{\pi(2)})\geq...\geq\lambda(c_{\pi(K)})$. The computation results $W_{\pi(k)}^{out}$ are stored in the cache as long as $\sum_{k=1}^{K}\left|W_{\pi(k)}^{out}\right|\leq m$.

Generally, the caching metric $\lambda$ is an increasing function of the product of the popularity $p_k$ of the task by the number of bits of the input data $\left|W_k^{in}\right|$ and a decreasing function of the number of bits of the output data $\left|W_k^{out}\right|$. According to a preferred embodiment, the caching metric is simply expressed as:

$$\lambda\left(c_k\right) = p_k \left|W_k^{in}\right| \left|W_k^{out}\right|^{-1} \quad \forall k \in \{1,...,K\} \tag{5}$$

The increasing function, here $p_k \left|W_k^{in}\right|$ illustrates the fact that a very popular task with less input data bits can be less advantageously cached than a less popular task with more input data bits. In fact, only the weighted average number of input data bits $\left(p_k \left|W_k^{in}\right|\right)$ of the requested task needs to be taken into account.

The decreasing function, here $\left|W_k^{out}\right|^{-1}$, illustrates the fact that caching a computational result whose size is small is more advantageous than caching a computational result of a higher size (for a given $p_k \left|W_k^{in}\right|$) since more computational results of tasks can be stored in the cache memory.

The popularity of a task can be derived from statistics on offloading requests originating from UEs within the cell. These statistics can be provided *a priori* to the SSC or be updated by continuously monitoring the offloading requests. A simple way to obtain the popularity of a task $c_k$ over a given time period is to calculate the ratio $n_k / N$ where $n_k$ is the number of offloading requests of task $c_k$ and $N$ is the total number of offloading requests over this time period.

Alternatively or cumulatively, the popularity of the task can be derived from the profiles of the users or community/population user profiles, possibly in combination of environment or time criterion.

Alternatively, the popularity of a task can be obtained from the popularity matrix related to a cluster of $L$ SSCs. This popularity matrix gives for each task $c_k$, $k = 1,...,K$ its probability to be requested within cell $\ell = 1,..., L$ and the popularity of a task can be derived as the average probability of it to be requested over said cluster.

The size $\left|W_k^{out}\right|$ of the data output result of a task $c_k$ can be obtained in various ways. First, it can be computed by the SSC itself, once it has performed the task $c_k$ on the input data $W_k^{out}$. Alternatively, the same task may have already been performed at the UE and the size $\left|W_k^{out}\right|$ sent to the SSC. Alternatively, the size $\left|W_k^{out}\right|$ of the output data may be estimated by the UE before requesting the offload of the task. This can be the case for example if the result has to comply with a predetermined format (such as a FFT of a given number of points, for example). It should be noted that different UEs may estimate different values $\left|W_k^{out}\right|$ for the same task thus leading to different caching metric values $\lambda(c_k)$. The SSC would then give different priorities for a same computation result to be cached, depending upon the UE which requested the offloading. The computations results would then be stored in the cache by taking into account the popularity of the users or group of users and their respective estimates of the size $\left|W_k^{out}\right|$.

Finally, the various parameters involved in the computation of the caching metrics may be obtained with machine learning techniques on the basis of a training set of observations over a time window, for example k-means, decision trees, random forests or state vector machine (SVM) known by the man skilled in the art.

If the SSC belongs to a cluster of neighboring SSCs pooling their cache resources via the backhaul network, the caching policy can be optimized over the cluster by taking into account the connectivity matrix of the SSCs and the mean data rate on each backhaul links. More specifically, if we denote $\lambda_k^v$ the caching metric of computational task $c_k$ in SSC $v$, it may be expressed as follows:

$$\lambda_k^\ell = \frac{\left|W_k^{in}\right|}{\left|W_k^{out}\right|} \frac{1}{\rho} \sum_{\ell'=1}^{L} v_{\ell\ell'} p_k^{\ell'} \tag{6}$$

where $v_{\ell\ell'}$ are the element of the LxL connectivity matrix of the SSCs within the cluster (i.e. $v_{\ell\ell'} =1$ is there is a backhaul link between SSCs $\ell$ and $\ell$ and $v_{\ell\ell} =0$ otherwise) and $\rho$ is the average bit rate on the backhaul links. Indeed, the higher the bit rate and the lower the incentive to store the computational result locally.

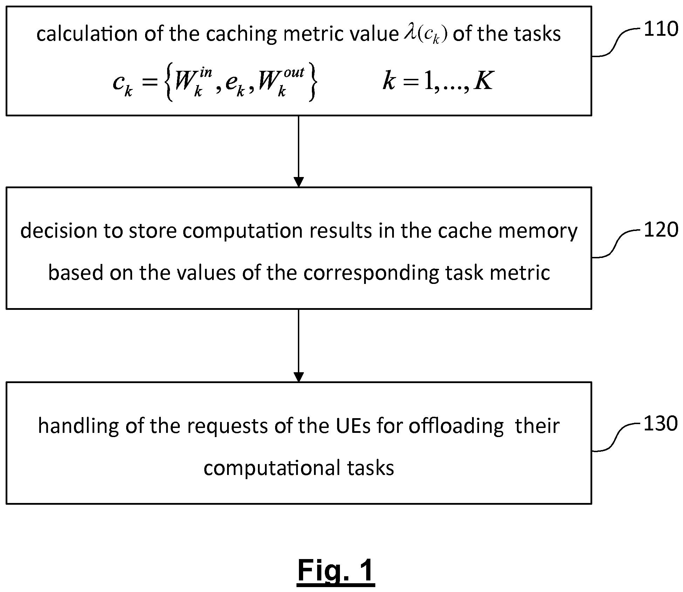

Fig. 1 schematically illustrates a method of caching results of tasks requested by UEs in a SSC, according to a first embodiment the invention.

The UEs are adapted to send requests for offloading computational tasks to the SSC, each task being identified by a label $k$ and belonging to a computation catalogue $C=\{c_1,...,c_K\}$.

At step 110, the SSC calculates the metric value (cacheability value) of each task $c_k$, $k = 1,...,K$ of the computation catalogue, a task being defined at least defined by a triplet $c_k = \left\{ W_k^{in}, e_k, W_k^{out} \right\}$ where $k$ is the label of the task, $W_k^{in}$ is the sequence of input bits, $e_k$ is the number of CPU cycles per input bit needed (or alternatively the number of cycles $W_k^{in}.e_k$ ) to perform the task and $W_k^{out}$ is the sequence of bits representing the computation result. The metric value can be calculated according to (5), or according to (6) if the caching resources are clustered.

At step 120, the SSC decides to store the results of the computational tasks in the cache memory by using a storage criterion based on the metric values of the tasks. This storage criterion is designed such that the result of a computational task having a higher metric value being more likely stored in the cache memory than the result of a computational task of lower metric value.

At step 130, the SSC handles the requests of the UEs to offload their computational tasks.

When a request $r_n=(k_n,t_n)$ to offload a computational task is received by the SSC, the SSC checks whether the computation result is present in the cache. If it is stored in the cache, the corresponding result $W_{k_n}^{out}$ is transmitted over the downlink to the UE that requested it. If it is not present in the cache, the SSC determines from the number of CPU cycles/ bit $e_{k_n}$ and the number of bits of the input data $\left| W_{k_n}^{in} \right|$ whether it can compute it before $t_n$ . If not, the SSC denies the request. Otherwise, the SSC performs the computation of the task and downloads the result to the UE once it has been computed.

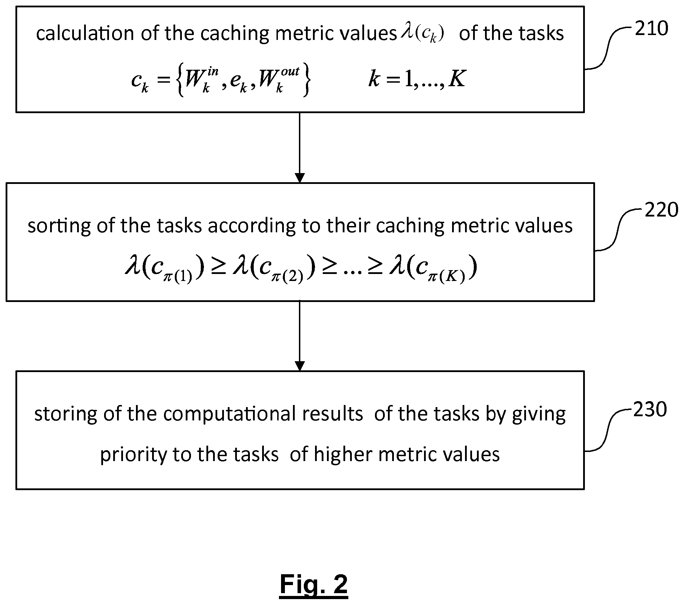

Fig. 2 schematically illustrates a method of caching results of tasks requested by UEs in a SSC, according to a second embodiment of the invention.

This embodiment corresponds to the situation where the cache memory is empty and the computation results of the tasks of the catalogue are all known or have been previously estimated.

Step 210 is identical to step 110 of Fig.1, i.e. the SSC calculates the caching metric value of each task $c_k$, $k = 1,...,K$ of the computation catalogue.

At step 220, the SSC sorts the tasks according to their respective caching metric values, thereby obtaining a permutation $\pi:\{1,...,K\} \rightarrow \{1,...,K\}$ such that $\lambda(c_{\pi(1)}) \geq \lambda(c_{\pi(2)}) \geq ... \geq \lambda(c_{\pi(K)})$.

At step 230, the SSC stores the computation results $W_k^{out}$ of the tasks $c_k$, $k = 1,...,K$ , by giving priority to the tasks having higher caching metric values. More specifically, the SSC starts filling the cache with the computation result $W_{\pi(1)}^{out}$ corresponding to the highest caching metric value and then goes on with $W_{\pi(2)}^{out}$ corresponding to the second highest caching metric value and so on until the cache memory is full or the computation result having the lowest caching metric value $W_{\pi(K)}^{out}$ is stored in the cache.

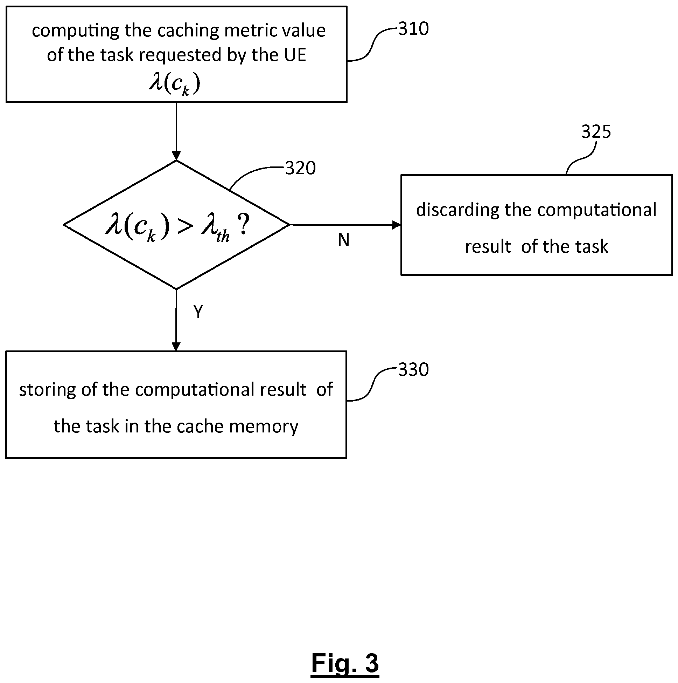

Fig. 3 schematically illustrates a method of caching results of tasks requested by UEs in a SSC, according to a third embodiment of the invention.

This embodiment corresponds to a situation where the cache memory has still storage space for accommodating new computation results.

It is assumed that the SSC has just performed a computational task $c_k$ and sent it to a UE that requested it. The SSC then checks whether the computation result is to be stored in the cache memory.

For so doing, the SSC computes in 310 the caching metric value of the task in question, $\lambda(c_k)$.

At step 320, the SSC compares the caching metric value with a predetermined threshold $\lambda_{th}$. If the caching metric value exceeds the threshold, $\lambda > \lambda_{th}$ , the computation result is stored in the cache memory at step 330. In the negative, the computation result is discarded in 325.

In some instances, the threshold $\lambda_{th}$ can be adaptive. For example, it can be made dependent upon the occupancy level of the cache memory, the higher the occupancy level the higher the threshold. The threshold $\lambda_{th}$ can be initialized with a zero value when the cache memory is empty and can be progressively increased when the cache memory fills.

The threshold $\lambda_{th}$ can be estimated by a prediction algorithm after it has been trained on a set of cache memories filled with target volume of data at a target percentage of their volume capacity. Alternatively, the threshold $\lambda_{th}$ can be

provided to the SSC by a centralized server. Alternatively, the threshold $\lambda_{th}$ can be provided by a neighboring SSC having the same or similar frequency of requests and the same computing relationship between $W_k^{in}$ and $W_k^{out}$.

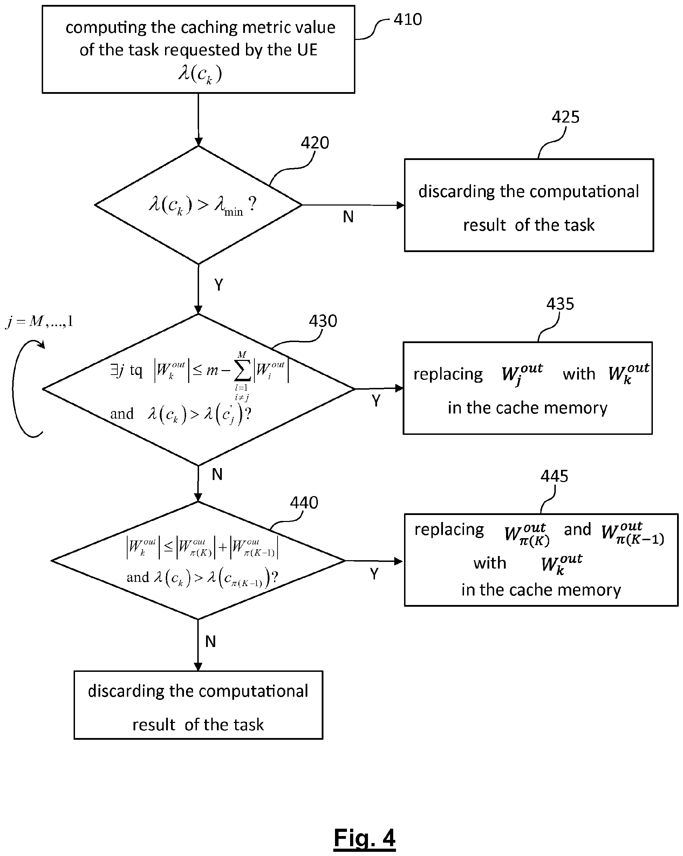

Fig. 4 schematically illustrates a method of caching results of tasks requested by UEs in a SSC, according to a fourth embodiment of the invention.

This embodiment corresponds to the situation where the cache memory is already full but new incoming requests to offload tasks are still received from the UEs. In such instance, it may be necessary to update the cache memory with the computation results of the new tasks. For example, if the caching metric $\lambda(c_k)$ of a new task requested by a UE is such that $\lambda(c_k) > \lambda_{min}$ where $\lambda_{min} = \lambda(c_{\pi(K)})$ is the minimum of the caching metrics of the tasks for which the computation results are stored in the cache memory, it may be necessary to arbitrate between results already stored and the one just computed.

More specifically, the caching metric $\lambda(c_k)$ of the new task is computed at step 410.

At step 420, it is checked whether $\lambda(c_k) > \lambda_{min}$, that is whether the caching metric of the new task is higher than the minimum value $\lambda_{min}$.

If it is not the case, the computing result $W_k^{out}$ is simply discarded at step 425.

On the contrary, in the affirmative, if $\lambda(c_k) > \lambda_{min}$, let us denote $c_i^{'}$, $i = 1,...,M$, the tasks the results of which are already stored in the cache, ordered in such a way that $\lambda\left(c_1^{'}\right) \geq \lambda\left(c_2^{'}\right) \geq ... \geq \lambda\left(c_M^{'}\right) = \lambda_{min}$.

It is checked at 430 whether $\left|W_k^{out}\right| \leq m - \sum_{i=1}^{M-1}\left|W_i^{out}\right|$ recalling that m is the size of the cache. If the above condition is met, the computation result $W_k^{out}$ replaces $W_M^{out}$ at 435. This situation may especially arise when all the computing results have the same size (e.g. same format).

If said condition is not met, the SSC repeats the same procedure as above with all the $W_j^{out}$ such that $\lambda\left(c_k\right) > \lambda\left(c_j^{'}\right)$ for $j = M - 1, M -2,...$ until the condition $\left|W_k^{out}\right| \leq m - \sum_{\substack{i=1,...,M \\ i \neq j}}\left|W_i^{out}\right|$ is met for some $j$ (in such instance, $W_k^{out}$ replaces $W_j^{out}$) or $\lambda\left(c_k\right) \leq \lambda\left(c_j^{'}\right)$, $\forall j\, j = M,...,1$.

If the above update procedure fails, the SSC looks for the second lowest caching metric value $\lambda(c_{\pi(K-1)})$ and checks at 440 whether $\left|W_k^{out}\right| \leq \left|W_{\pi(K)}^{out}\right| + \left|W_{\pi(K-1)}^{out}\right|$. If the latter condition is not met again, the computation result $W_k^{out}$ is discarded at step 450. Otherwise, at step 445, the computation $W_k^{out}$ replaces the concatenation of computation results $W_{\pi(K)}^{out}$ and $W_{\pi(K-1)}^{out}$ in the cache memory. As represented, an additional condition for this replacement at step 440 could be that $\lambda(c_k) > \lambda(c_{\pi(K-1)})$. A preferred alternative condition is $\lambda(c_k) > \lambda(c_{\pi(K)}) + \lambda(c_{\pi(K-1)})$.

Note that instead of discarding $W_k^{out}$ at step 450 the process of tentatively finding a further computation result $W_{\pi(K-1)}^{out}$ may be further carried on.

However, in such instance, a replacement could only be accepted if:

$$\exists k_0 \text{ such that } \left|W_k^{out}\right| \leq \sum_{i=0}^{k_0}\left|W_{\pi(K-i)}^{out}\right| \text{ and } \lambda\left(c_k\right) > \sum_{i=0}^{k_0}\lambda\left(c_{\pi(K-i)}\right) \qquad (7)$$

If condition (7) is met, $W_k^{out}$ may replace the concatenation of the computation results $W_{\pi(K-i)}^{out}$, $i = 0,...,k_0$ in the cache memory.

Note that instead of discarding $W_k^{out}$ at step 450 the process of tentatively finding a combination of two (or more) computation results to replace with $W_k^{out}$ may be further carried out. However, in such instance, a replacement can only be accepted if $\lambda(c_k)$ is greater than the sum of the caching metric values associated with the results to be replaced and, simultaneously, $\left| W_k^{out} \right|$ is not greater than the space available in the cache if those results were removed.

## Claims

1. Method of computation caching in a serving cell of a MEC, Mobile Edge Computing, network, said serving cell being provided with local computing resources for performing computational tasks and a local cache memory, UEs, User Equipments, being able to send task offloading requests on the uplink of the serving cell, each request, $r_n$, of a UE for a computational task to be offloaded to the serving cell being identified by a computation task label, k, **characterized in that**:

    - the serving cell (110) assigns to each computational task $c_k$ a metric value $\lambda(c_k)$ which is calculated as an increasing function of the product $p_k \left| W_k^{in} \right|$ , where $p_k$ is the popularity of the task and $\left| W_k^{in} \right|$ is the size of the input data of the task, and a decreasing function of the size $\left| W_k^{out} \right|$ of the result of the computational task;
    - the serving cell stores (120) the results of the computational tasks in the cache memory based on their respective metric values, the result of a computational task having a higher metric value being more likely stored in the cache memory than the result of a computational task of lower metric value.

2. Method of computation caching according to claim 1, **characterized in that** the metric value $\lambda(c_k)$ of a computation task is calculated as $\lambda\left(c_k\right) = p_k \left| W_k^{in} \right| \left| W_k^{out} \right|^{-1}$ .

3. Method of computation caching according to claim 1, **characterized in that** said serving cell belongs to a cluster of neighboring serving cells sharing their cache memories, the serving cells being connected to each other by backhaul links according to a binary connectivity matrix, the caching metric of a computational task $c_k$ in said serving cell $\ell$ being calculated as $\lambda_k^\ell = \dfrac{\left| W_k^{in} \right|}{\left| W_k^{out} \right|} \dfrac{1}{\rho} \sum_{\ell'=1}^{L} v_{\ell\ell'} p_k^{\ell'}$ where $v_{\ell\ell'}$, $\ell,\ell'=1,...,L$ are the elements of said binary connectivity matrix, $L$ being the number of serving cells in the cluster, and $\rho$ being the average data rate on said backhaul links.

4. Method of computation caching according to any claim 1 to 3, **characterized in that** the computational tasks belong to a computation catalogue $C = \{c_1,...,c_K\}$ and that the serving cell calculates in a first step (210) the metric value $\lambda(c_k)$ of each task $c_k$, $k = 1,...,K$ of the computation catalogue, and sorts in a second step (220) the metric values thus obtained, $\lambda(c_{\pi(1)}) \geq \lambda(c_{\pi(2)}) \geq ... \geq \lambda(c_{\pi(K)})$, thereby defining a permutation $\pi$ on the computational task labels , the serving cell filling the cache memory with respective computation results $W_k^{out}$ of said computational tasks, by starting with the one corresponding to the higher metric value, $\lambda(c_{\pi(1)})$, and carrying on with computation results corresponding to computational tasks having decreasingly metric values until the cache memory is full or the computation result corresponding to the computational task having the lowest metric value is stored in the cache memory.

5. Method of computation caching according to any claim 1 to 3, **characterized in that**, starting from a stage where the cache memory is not full, the serving cell receiving a new task offloading request from a user equipment, calculates (310) the metric value $\lambda(c_k)$ of the requested task and compares it (320) with a predetermined positive threshold value ($\lambda_{th}$), the serving cell storing (330) the computation result of said task in the cache memory if the metric value exceeds said threshold value and discarding it (325) otherwise.

6. Method of computation caching according to claim 5, **characterized in that** said threshold value depends upon the occupancy rate of the cache memory.

7. Method of computation caching according to any claim 1 to 3, **characterized in that**, starting from a stage where the cache memory is full, the serving cell receiving a new task offloading request from a user equipment, calculates (410) the metric value $\lambda(c_k)$ of the new requested task and compares it (420) with the metric value of a computation task the computation result of which is already stored in the cache memory, starting from the lowest metric value ($\lambda_{min}$), the computation result of the new requested task ( $W_k^{out}$ ) being stored in the cache memory in place of the computation result ( $W_j^{out}$ ) of said computation result already stored in the cache memory, if the size of the former result ( $\left|W_k^{out}\right|$ ) is lower than or equal to the size of the cache memory ($m$) minus the total size of the results

$$m - \sum_{\substack{i=1,...,M-1 \\ i \neq j}} \left|W_i^{out}\right|$$

already stored except the latter result ( ).

8. Method of computation caching according to any claim 7, **characterized in that**, if the size of the computation result of the new requested task ( $\left|W_k^{out}\right|$ ) is higher than the size of the computation result ( $\left|W_{\pi(K)}^{out}\right|$ ), corresponding to the lowest metric value, stored in the cache memory, the serving cell determines the task having the second lowest metric value and checks whether the size of the computation result of new requested task is lower than the sum of the size of the computation result corresponding to the lowest metric value and the size of the computation result corresponding to the second lowest metric value and, if the metric value of the new requested task is higher than the sum of lowest and second lowest metric values ($\lambda(c_{\pi(K)}) + \lambda(c_{\pi(K-1)})$), replaces the concatenation of the computation results corresponding to the lowest and second lowest metric values with the computation result of the new requested task and, in the negative, discards the latter computation result.

9. Method of computation caching according to any preceding claim, **characterized in that** if the computation result of the task identified by said task label is stored in the cache memory, the computation result is retrieved from the cache memory and downloaded to the UE which requested it.

10. Method of computation caching according to claim 9, **characterized in that** the request ($r_n$) from a UE to offload a computational task further comprises a latency value ($t_n$), and, if the computation result of this task is not stored in the cache memory, the serving cell determines whether it can perform the computation of this task within the latency value, the serving cell downloading the computation result thus obtained to the UE in the affirmative and denying the request to the UE in the negative.

**Patentansprüche**

1. Verfahren zum Zwischenspeichern von Berechnungen in einer bedienenden Zelle eines MEC (Mobile Edge Computing)-Netzwerks, wobei die Funkzelle mit lokalen Rechenressourcen zum Ausführen von Berechnungsaufgaben und einem lokalen Zwischenspeicher ausgestattet ist, wobei UEs (Teilnehmergeräte) in der Lage sind, Anforderungen zum Auslagern von Aufgaben auf der Uplink-Verbindung der Funkzelle zu senden, wobei jede Anforderung eines UE für eine Berechnungsaufgabe, die auf die Funkzelle ausgelagert werden soll, durch ein Label für eine Berechnungsaufgabe identifiziert wird, **dadurch gekennzeichnet, dass**:

- die Funkzelle (110) jeder Rechenaufgabe $c_k$ einen metrischen Wert $\lambda(c_k)$ zuweist, der gemäß einer ansteigenden Funktion des Produkts $p_k \left|W_k^{in}\right|$ , wobei $p_k$ die Popularität der Aufgabe und $\left|W_k^{in}\right|$ die Größe der Eingabedaten der Aufgabe ist, und gemäß einer abfallenden Funktion der Größe $\left|W_k^{out}\right|$ des Ergebnisses der Rechenaufgabe berechnet wird;
- die Funkzelle die Ergebnisse der Rechenaufgaben in dem Cache-Speicher auf der Grundlage ihrer jeweiligen metrischen Werte speichert (120), wobei das Ergebnis einer Rechenaufgabe mit einem höheren metrischen Wert mit größerer Wahrscheinlichkeit in dem Cache-Speicher gespeichert wird als das Ergebnis einer Rechenaufgabe mit einem niedrigeren metrischen Wert.

2. Verfahren zur Zwischenspeicherung von Berechnungen nach Anspruch 1, **dadurch gekennzeichnet, dass** der metrische Wert $\lambda(c_k)$ einer Berechnungsaufgabe berechnet wird als $\lambda(c_k) = p_k \left| W_k^{in} \right| \left| W_k^{out} \right|^{-1}$ .

3. Verfahren zum Zwischenspeichern von Berechnungen nach Anspruch 1, **dadurch gekennzeichnet, dass** die Funkzelle zu einem Cluster von benachbarten Funkzellen gehört, die ihre Zwischenspeicher gemeinsam nutzen, wobei die Funkzellen miteinander durch Backhaul-Verbindungen gemäß einer binären Konnektivitätsmatrix verbunden sind, wobei die Zwischenspeichermetrik einer Berechnungsaufgabe $c_k$ in der Funkzelle $\ell$ wie folgt berechnet wird:

$$\lambda_k^\ell = \frac{\left| W_k^{in} \right|}{\left| W_k^{out} \right|} \frac{1}{\rho} \sum_{\ell'=1}^{L} v_{\ell\ell'} p_k^{\ell'}$$

, wobei $v_{\ell\ell'}$, $\ell,\ell' = 1,...,L$ , die Elemente der binären Konnektivitätsmatrix sind, $L$ die Anzahl der Funkzellen in dem Cluster ist und $\rho$ die durchschnittliche Datenrate auf den Backhaul-Verbindungen ist.

4. Verfahren zum Zwischenspeichern von Berechnungen nach einem der Ansprüche 1 bis 3, **dadurch gekennzeichnet, dass** die Berechnungsaufgaben zu einem Berechnungskatalog $C=\{c_1,...,c_K\}$ gehören und dass die Funkzelle in einem ersten Schritt (210) den metrischen Wert $\lambda(c_k)$ jeder Aufgabe $c_k$, $k = 1,...,K$ des Berechnungskatalogs berechnet und in einem zweiten Schritt (220) die so erhaltenen metrischen Werte sortiert, $\lambda(c_{\pi(1)}) \geq \lambda(c_{\pi(2)}) \geq ... \geq \lambda(c_{\pi(K)})$, wodurch eine Permutation $\pi$ auf den Labels der Berechnungsaufgaben definiert wird, wobei die Funkzelle den Cache-Speicher mit den jeweiligen Berechnungsergebnissen $W_k^{out}$ der Berechnungsaufgaben füllt, indem sie mit demjenigen beginnt, das dem höheren metrischen Wert $\lambda(c_{\pi(1)})$ entspricht, und mit den Berechnungsergebnissen fortfährt, die den Berechnungsaufgaben mit abnehmenden metrischen Werten entsprechen, bis der Cache-Speicher voll ist oder das Berechnungsergebnis, das der Berechnungsaufgabe mit dem niedrigsten metrischen Wert entspricht, im Cache-Speicher gespeichert ist.

5. Verfahren zum Zwischenspeichern von Berechnungen nach einem der Ansprüche 1 bis 3, **dadurch gekennzeichnet, dass** ausgehend von einem Stadium, in dem der Cache-Speicher nicht voll ist, die Funkzelle, die eine neue Anforderung zum Auslagern einer Aufgabe von einem Teilnehmergerät empfängt, den metrischen Wert $\lambda(c_k)$ der angeforderten Aufgabe berechnet (310) und ihn mit einem vorbestimmten positiven Schwellenwert ($\lambda_{th}$) vergleicht (320), wobei die Funkzelle das Berechnungsergebnis der Aufgabe in dem Cache-Speicher speichert (330), wenn der metrische Wert den Schwellenwert übersteigt, und ihn andernfalls verwirft (325).

6. Verfahren zum Zwischenspeichern von Berechnungen nach Anspruch 5, **dadurch gekennzeichnet, dass** der Schwellenwert von der Auslastung des Cache-Speichers abhängt.

7. Verfahren zum Zwischenspeichern von Berechnungen nach einem der Ansprüche 1 bis 3, **dadurch gekennzeichnet, dass** die Funkzelle, die eine neue Anforderung zur Auslagerung einer Aufgabe von einem Teilnehmergerät empfängt, ausgehend von einem Stadium, in dem der Cache-Speicher voll ist, den metrischen Wert $\lambda(c_k)$ der neuen angeforderten Aufgabe berechnet (410) und ihn mit dem metrischen Wert einer Berechnungsaufgabe vergleicht (420), deren Berechnungsergebnis bereits im Cache-Speicher gespeichert ist, wobei ausgehend vom niedrigsten metrischen Wert ($\lambda_{min}$) das Berechnungsergebnis der neuen angeforderten Aufgabe $(W_k^{out})$ im Cache-Speicher anstelle des Berechnungsergebnisses $(W_j^{out})$ des bereits im Cache-Speicher gespeicherten Berechnungsergebnisses gespeichert wird, wenn die Größe des ersteren Ergebnisses $(\left| W_k^{out} \right|)$ kleiner oder gleich der Größe des Cache-Speichers ($m$) abzüglich der Gesamtgröße der bereits gespeicherten Ergebnisse mit Ausnahme des letzteren Ergebnisses $\left( m - \sum_{\substack{i=1,\ldots,M-1 \\ i \neq j}} \left| W_i^{out} \right| \right)$ ist.

8. Verfahren zum Zwischenspeichern von Berechnungen nach einem der Ansprüche 7, **dadurch gekennzeichnet, dass**, wenn die Größe des Berechnungsergebnisses der neuen angeforderten Aufgabe $\left( \left| W_k^{out} \right| \right)$ größer ist als die Größe des Berechnungsergebnisses $\left( \left| W_{\pi(K)}^{out} \right| \right)$, das dem niedrigsten metrischen Wert entspricht und im Cache-Speicher gespeichert ist, die Funkzelle die Aufgabe bestimmt, die den zweitniedrigsten metrischen Wert hat, und prüft, ob die Größe des Berechnungsergebnisses der neuen angeforderten Aufgabe kleiner ist als die Summe der Größe des Berechnungsergebnisses, das dem niedrigsten metrischen Wert entspricht, und der Größe des Berechnungsergebnisses, das dem zweitniedrigsten metrischen Wert entspricht, und, wenn der metrische Wert der neuen angeforderten Aufgabe höher ist als die Summe des niedrigsten und des zweitniedrigsten metrischen Wertes $(\lambda(c_{\pi(K)})+\lambda(c_{\pi(K-1)}))$, ersetzt sie die Verkettung der Berechnungsergebnisse, die dem niedrigsten und dem zweitniedrigsten metrischen Wert entsprechen, durch das Berechnungsergebnis der neuen angeforderten Aufgabe und verwirft im negativen Fall das letztgenannte Berechnungsergebnis.

9. Verfahren zum Zwischenspeichern von Berechnungen nach einem der vorhergehenden Ansprüche, **dadurch gekennzeichnet, dass**, wenn das Berechnungsergebnis der Aufgabe, die durch das Label der Aufgabe identifiziert wird, im Cache-Speicher gespeichert ist, das Berechnungsergebnis aus dem Cache-Speicher abgerufen und zu dem UE heruntergeladen wird, das es angefordert hat.

10. Verfahren zum Zwischenspeichern von Berechnungen nach Anspruch 9, **dadurch gekennzeichnet, dass** die Anforderung ($r_n$) von einem UE, eine Berechnungsaufgabe auszulagern, ferner einen Latenzwert ($t_n$) aufweist, und, wenn das Berechnungsergebnis dieser Aufgabe nicht in dem Cache-Speicher gespeichert ist, die Funkzelle bestimmt, ob sie die Berechnung dieser Aufgabe innerhalb des Latenzwertes durchführen kann, wobei die Funkzelle das so erhaltene Berechnungsergebnis an das UE herunterlädt, wenn dies bejaht wird, und die Anforderung an das UE ablehnt, wenn dies verneint wird.

## Revendications

1. Procédé de mise en cache de calcul dans une cellule de desserte d'un réseau Mobile Edge Computing, MEC, ladite cellule de desserte étant dotée de ressources informatiques locales pour accomplir des tâches de calcul et d'une mémoire cache locale, des UE, équipements utilisateur, étant aptes à envoyer des requêtes de déchargement de tâche sur la liaison montante de la cellule de desserte, chaque requête, $r_n$, d'un UE pour une tâche de calcul à décharger vers la cellule de desserte étant identifiée par une étiquette de tâche de calcul, k, **caractérisé en ce que** :

    - la cellule de desserte (110) attribue à chaque tâche de calcul $c_k$ une valeur métrique $\lambda(c_k)$ qui est calculée comme étant une fonction croissante du produit $p_k \left| W_k^{in} \right|$, où $P_k$ est la popularité de la tâche et $\left| W_k^{in} \right|$ est la taille des données d'entrée de la tâche, et une fonction décroissante de la taille $\left| W_k^{out} \right|$ du résultat de la tâche de calcul ;
    - la cellule de desserte stocke (120) les résultats des tâches de calcul dans la mémoire cache sur la base de leurs valeurs métriques respectives, le résultat d'une tâche de calcul ayant une valeur métrique supérieure étant plus probablement stocké dans la mémoire cache que le résultat d'une tâche de calcul de valeur métrique inférieure.

2. Procédé de mise en cache de calcul selon la revendication 1, **caractérisé en ce que** la valeur métrique $\lambda(c_k)$ d'une tâche de calcul est calculée comme étant $\lambda\left( c_k \right) = p_k \left| W_k^{in} \right| \left| W_k^{out} \right|^{-1}$.

3. Procédé de mise en cache de calcul selon la revendication 1, **caractérisé en ce que** ladite cellule de desserte appartient à un groupe de cellules de desserte voisines partageant leurs mémoires caches, les cellules de desserte étant connectées les unes aux autres par des liaisons de collecte selon une matrice de connectivité binaire, la métrique de mise en cache d'une tâche de calcul $c_k$ dans ladite cellule de desserte $\ell$ étant calculée comme étant

$$\lambda_k^\ell = \frac{|W_k^{in}|}{|W_k^{out}|} \frac{1}{\rho} \sum_{\ell'=1}^{L} v_{\ell\ell'} p_k^{\ell'}$$

où $v_{\ell\ell'}$, $\ell,\ell' = 1,...,L$ sont les éléments de ladite matrice de connectivité binaire, L étant le nombre de cellules de desserte dans le groupe, et $P$ étant le débit de données moyen sur lesdites liaisons de collecte.

4.  Procédé de mise en cache de calcul selon une quelconque revendication 1 à 3, **caractérisé en ce que** les tâches de calcul appartiennent à un catalogue de calcul $C = \{c_1,...,c_K\}$ et **en ce que** la cellule de desserte calcule dans une première étape (210) la valeur métrique $\lambda(c_k)$ de chaque tâche $c_k$, $k = 1,...,K$ du catalogue de calcul, et trie dans une deuxième étape (220) les valeurs métriques ainsi obtenues, $\lambda(c_{\pi(1)}) \geq \lambda(c_{\pi(2)}) \geq ... \geq \lambda(c_{\pi(K)})$, définissant ainsi une permutation $\pi$ sur les étiquettes de tâche de calcul, la cellule de desserte remplissant la mémoire cache avec des résultats de calcul respectifs $W_k^{out}$ desdites tâches de calcul, en commençant par celui correspondant à la valeur de métrique supérieure, $\lambda(c_{\pi(1)})$, et en poursuivant par des résultats de calcul correspondant à des tâches de calcul ayant des valeurs métriques décroissantes jusqu'à ce que la mémoire cache soit pleine ou que le résultat de calcul correspondant à la tâche de calcul ayant la valeur métrique la plus basse soit stocké dans la mémoire cache.

5.  Procédé de mise en cache de calcul selon une quelconque revendication 1 à 3, **caractérisé en ce que**, en commençant par un étage où la mémoire cache n'est pas pleine, la cellule de desserte recevant une nouvelle requête de déchargement de tâche en provenance d'un équipement utilisateur, calcule (310) la valeur métrique $\lambda(c_k)$ de la tâche ayant fait l'objet d'une requête et la compare (320) à une valeur seuil positive ($\lambda_{th}$) prédéterminée, la cellule de desserte stockant (330) le résultat de calcul de ladite tâche dans la mémoire cache si la valeur métrique dépasse ladite valeur seuil et la supprime (325) sinon.

6.  Procédé de mise en cache de calcul selon la revendication 5, **caractérisé en ce que** ladite valeur seuil dépend du taux d'occupation de la mémoire cache.

7.  Procédé de mise en cache de calcul selon une quelconque revendication 1 à 3, **caractérisé en ce que**, en commençant par un état où la mémoire cache est pleine, la cellule de desserte recevant une nouvelle requête de déchargement de tâche en provenance d'un équipement utilisateur, calcule (410) la valeur métrique $\lambda(c_k)$ de la nouvelle tâche ayant fait l'objet d'une requête et la compare (420) à la valeur métrique d'une tâche de calcul dont le résultat de calcul est déjà stocké dans la mémoire cache, en commençant par la valeur métrique la plus basse ($\lambda_{min}$), le résultat de calcul de la nouvelle tâche ayant fait l'objet d'une requête ( $W_j^{out}$ ) étant stocké dans la mémoire cache à la place du résultat de calcul ( $W_k^{out}$ ) dudit résultat de calcul déjà stocké dans la mémoire cache, si la taille du résultat précédent ( $|W_k^{out}|$ ) est inférieure ou égale à la taille de la mémoire cache ($m$) moins la taille totale des

$$m - \sum_{\substack{i=1,...,M-1 \\ i \neq j}} |W_i^t|$$

résultats déjà stockés à l'exception du dernier résultat ( ).

8.  Procédé de mise en cache de calcul selon une quelconque revendication 7, **caractérisé en ce que**, si la taille du résultat de calcul de la nouvelle tâche ayant fait l'objet d'une requête ( $|W_k^{out}|$ ) est supérieure à la taille du résultat de calcul ( $|W_{\pi(K)}^{out}|$ ), correspondant à la valeur métrique la plus basse, stocké dans la mémoire cache, la cellule de desserte détermine la tâche ayant la deuxième valeur métrique la plus basse et vérifie si la taille du résultat de calcul de la nouvelle tâche ayant fait l'objet d'une requête est inférieure à la somme de la taille du résultat de calcul correspondant à la valeur métrique la plus basse et de la taille du résultat de calcul correspondant à la deuxième valeur métrique la plus basse et, si la valeur métrique de la nouvelle tâche ayant fait l'objet d'une requête est supérieure à la somme des valeurs métriques la plus basse et la deuxième plus basse ($\lambda(c_{\pi(K)}) + \lambda(c_{\pi(K-1)})$), remplace la concaténation des résultats de calcul correspondant aux valeurs métriques la plus basse et la deuxième plus basse par le résultat de calcul de la nouvelle tâche ayant fait l'objet d'une requête et, dans la négative, supprime le dernier résultat de calcul.

9.  Procédé de mise en cache de calcul selon une quelconque revendication précédente, **caractérisé en ce que** si le résultat de calcul de la tâche identifiée par ladite étiquette de tâche est stocké dans la mémoire cache, le résultat de calcul est récupéré à partir de la mémoire cache et téléchargé vers l'UE qui en a effectué la requête.

10. Procédé de mise en cache de calcul selon la revendication 9, **caractérisé en ce que** la requête ($r_n$) provenant d'un UE de décharger une tâche de calcul comprend en outre une valeur de latence ($t_n$), et, si le résultat de calcul de cette tâche n'est pas stocké dans la mémoire cache, la cellule de desserte détermine si elle peut accomplir le calcul de cette tâche en deçà de la valeur de latence, la cellule de desserte téléchargeant le résultat de calcul ainsi obtenu vers l'UE dans l'affirmative et refusant la requête à l'UE dans la négative.

calculation of the caching metric value $\lambda(c_k)$ of the tasks

$$c_k = \left\{ W_k^{in}, e_k, W_k^{out} \right\} \qquad k = 1,...,K$$

110

decision to store computation results in the cache memory based on the values of the corresponding task metric

120

handling of the requests of the UEs for offloading their computational tasks

130

## Fig. 1

calculation of the caching metric values $\lambda(c_k)$ of the tasks

$$c_k = \left\{ W_k^{in}, e_k, W_k^{out} \right\} \qquad k = 1, ..., K$$

<div style="text-align:right">210</div>

sorting of the tasks according to their caching metric values

$$\lambda(c_{\pi(1)}) \geq \lambda(c_{\pi(2)}) \geq ... \geq \lambda(c_{\pi(K)})$$

<div style="text-align:right">220</div>

storing of the computational results of the tasks by giving priority to the tasks of higher metric values

<div style="text-align:right">230</div>

**Fig. 2**

computing the caching metric value
of the task requested by the UE
$\lambda(c_k)$ ⌐310

$\lambda(c_k) > \lambda_{th}$ ? ⌐320

N

325

discarding the computational
result of the task

Y

storing of the computational result of
the task in the cache memory ⌐330

## Fig. 3

computing the caching metric value
of the task requested by the UE
$$\lambda(c_k)$$
410

420
$$\lambda(c_k) > \lambda_{\min} ?$$

N → discarding the computational
result of the task
425

Y

$j = M, ..., 1$

430
$$\exists j \ \text{tq} \ \left|W_k^{out}\right| \le m - \sum_{\substack{i=1 \\ i \ne j}}^{M} \left|W_i^{out}\right|$$
$$\text{and} \ \lambda(c_k) > \lambda(c_j')?$$

Y → replacing $W_j^{out}$ with $W_k^{out}$
in the cache memory
435

N

440
$$\left|W_k^{out}\right| \le \left|W_{\pi(K)}^{out}\right| + \left|W_{\pi(K-1)}^{out}\right|$$
$$\text{and} \ \lambda(c_k) > \lambda(c_{\pi(K-1)})?$$

Y → replacing $W_{\pi(K)}^{out}$ and $W_{\pi(K-1)}^{out}$
with $W_k^{out}$
in the cache memory
445

N

discarding the computational
result of the task

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 3045859 A

**Non-patent literature cited in the description**

- **LIXING CHEN et al.** Collaborative Service Caching for Edge Computing in Dense Small Cell Networks. Cornell University Library, 25 September 2017

- **S. WANG et al.** A survey of mobile edge networks: convergence of computing, caching and communications. *IEEE Access,* 2017, vol. 5, 6757-6779